# EUROPEAN PATENT SPECIFICATION

(11) **EP 3 410 533 B1**
(45) Date of publication and mention of the grant of the patent: **24.02.2021**
(21) Application number: 18174261.0
(22) Date of filing: 25.05.2018
(51) Int. Cl.: H01Q 1/38, H01Q 13/18, H01Q 21/00, H01Q 1/28, H01Q 21/06, H01Q 3/26

(54) **WIDEBAND ANTENNA SYSTEM**
BREITBANDANTENNENSYSTEM
SYSTÈME D'ANTENNE À LARGE BANDE

(30) Priority: 31.05.2017 US 201715609851
(43) Date of publication of application: 05.12.2018
(73) Proprietor: The Boeing Company, Chicago, IL 60606-2016 (US)
(72) Inventor: CAI, Lixin, Chicago, Illinois 60606-2016 (US); ADAMS, Alec, Chicago, Illinois 60606-2016 (US); URCIA, Manny S. Jr, Chicago, Illinois 60606-2016 (US)
(74) Representative: Boult Wade Tennant LLP

(56) References cited:
- EP-A1- 1 521 332
- JP-A- H11 251 831
- US-A1- 2009 273 533
- US-A1- 2011 248 891

## Description

### BACKGROUND INFORMATION

### 1. Field:

The present disclosure relates generally to antennas, and in particular, to wideband beam-forming antennas that are electronically scanned.

### 2. Background:

Antenna systems are used to send or receive radio frequency (RF) signals. These radio frequency signals often include information such as voice communications, images, messages, and other types of information.

One type of antenna system commonly used is a directional or beam-forming antenna. This type of antenna radiates or receives greater power in specific directions allowing for increased system performance and reduced interference to unintended receivers or from unintended transmitters. Wideband antennas are often used when substantial frequency range or multiple functions are desired. For example, aircraft wideband antennas may have multiple functions such as sensors, communications, and electronic warfare. Further, the beams from these antennas are often steered. The steering of the beams may be performed electronically or mechanically.

With respect to the use of these types of antennas on aircraft, weight and size are often a factor, in addition to performance. For example, motorized gimbals have been used to mechanically steer beams from antennas. Motorized gimbals, however, increase the weight and require additional space in the aircraft, and limit the beam-steering rate to lower than necessary for some applications.

Electronically steered antennas may be used to reduce weight and improve beam agility. However, typical radiators used in these types of antennas also result in more weight than desired for some applications. For example, existing electronically steered antennas often employ heavy and bulky slotted waveguides formed from rectangular copper pipes as used with some current architectures below Ku-band. This type of solution may be lighter than the use of a gimbal for azimuth, elevation scan, or both, but still may not meet desired weight requirements for some applications on aircraft or other types of vehicles, such as a spacecraft.

Therefore, it would be desirable to have a method and apparatus that take into account at least some of the issues discussed above, as well as other possible issues. For example, it would be desirable to have a method and apparatus that overcome a technical problem with steering beams over wide frequency range and field-of-regard from an antenna using an architecture that has a desired weight and performance.

JPH11251831 (A) describes an aperture-type antenna provided with a pair of conductors, a radiation aperture, a power feeding means consisting of a triplet line exciting the radiation aperture with a pair of conductors as ground conductors, a reflection board and a pair of electromagnetic walls consisting of conductors connected to one conductor of a pair of the conductors and a reflection board. A pair of electromagnetic boards are arranged nearly in parallel with the magnetic field surface of radio wave radiated from the radiation aperture sandwiching the radiation aperture.

EP1521332 (A1) describes an antenna element which is responsive in multiple frequency bands, has symmetric beam patterns, and is easily and cheaply fabricated. The antenna element includes at least three conductive plates arranged in a stack. At least one pair of adjacent plates contain apertures that are mutually aligned relative to the stacking direction. The antenna element further includes at least one air stripline arranged to create radiative electromagnetic excitations of the apertures when the stripline or striplines are energized by a suitable radiofrequency voltage source or sources.

US2011248891 (A1) describes a dielectric resonator antenna using a matching substrate in order to improve a bandwidth. The dielectric resonator antenna includes: a dielectric resonator body part that is embedded in a multi-layer substrate and has an opening part on the upper portion thereof; and at least one matching substrate that is stacked on the opening part and includes an an insulating layer having a dielectric constant smaller than that of the multi-layer substrate but larger than that of air, thereby making it possible to improve the bandwidth without adjusting the size of the dielectric resonator body part and to prevent loss and change in the radiation pattern due to the substrate mode.

US2009273533 (A1) a high gain, phased array antenna includes a conducting sheet having a number of one or more slots defined therein. For each slot, an electrical microstrip feed line is electronically coupled with a corresponding slot to form a magnetically-coupled LC resonance element. A main feed line couples with the one or more microstrip feed lines. A specific azimuth pattern, antenna frequency, and/or beam direction is/are selectable in accordance with specific structural or electrical characteristics of the antenna.

### SUMMARY

There is recited an antenna system according to claim 1 and a method for exchanging radio frequency signals according to claim 11.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of an antenna environment in accordance with an illustrative embodiment;
**Figure 2** is an illustration of a block diagram of an aperture structure in accordance with an illustrative embodiment;
**Figure 3** is an illustration of an antenna element in accordance with an illustrative embodiment;
**Figure 4** is an illustration of a top view of an antenna element in accordance with an illustrative embodiment;
**Figure 5** is an illustration of a cross-sectional view of an antenna element in accordance with an illustrative embodiment;
**Figure 6** is an illustration of a flowchart of a process for exchanging radio frequency signals in accordance with an illustrative embodiment;
**Figure 7** is an illustration of a block diagram of an aircraft manufacturing and service method in accordance with an illustrative embodiment; and
**Figure 8** is an illustration of a block diagram of an aircraft in accordance with an illustrative embodiment.

### DETAILED DESCRIPTION

The illustrative embodiments recognize and take into account one or more different considerations. For example, the illustrative embodiments recognize and take into account that current architectures for antennas, such as antennas that are wideband antennas and have steerable beams, may be heavier than desired for application in vehicles, such as aircraft and spacecraft. The illustrative embodiments recognize and take into account that the design of antenna elements may be designed to have a lighter weight than those currently used in electronically steerable antenna elements.

Further, the illustrative embodiments recognize and take into account that currently available antenna elements for wideband applications may be narrower in usable bandwidth over scan volume or field-of-regard and more expensive than desired. Bandwidth classification for antennas is often expressed as a percentage bandwidth (frequency range divided by center frequency). For example, under 10% is typically considered narrow bandwidth while over 15% is considered wideband. The bandwidth from 10% to 15% may be considered narrow or wideband.

Thus, the illustrative embodiments provide a method and apparatus for an antenna system. In one illustrative example, the antenna system includes an aperture structure, a primary radiating slot, a tuning slot, and a stripline feed. The primary radiating slot and the tuning slot are located in the aperture structure. The stripline feed is located between the primary radiating slot and the tuning slot in the aperture structure.

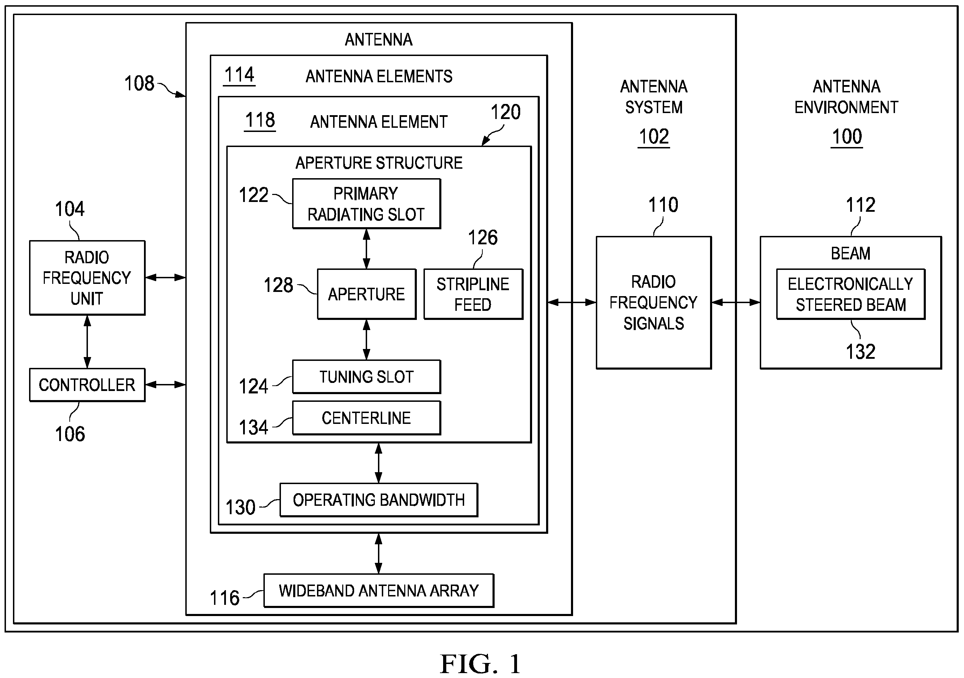

With reference now to the figures, and in particular with reference to **Figure 1****,** an illustration of a block diagram of an antenna environment is depicted in accordance with an illustrative embodiment. As depicted, antenna environment **100** includes antenna system **102.** Antenna system **102** includes radio frequency unit **104,** controller **106,** and antenna **108.**

In this illustrative example, radio frequency unit **104** may include at least one of a transmitter or a receiver for exchanging radio frequency signals **110.** As used herein, the phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item C; or item B and item C. Of course, any combinations of these items may be present. In some illustrative examples, "at least one of" may be, for example, without limitation, two of item A, one of item B, and ten of item C; four of item B and seven of item C; or other suitable combinations.

Controller **106** controls the operation of antenna elements **114** in an array environment. Controller **106** may be implemented in at least one of hardware or software. Controller **106** may be a processor unit in a computer system or a specialist circuit depending on the particular implementation.

As depicted, controller **106** may control the phases or time-delays at which radio frequency signals **110** are exchanged to form beam **112.** In this illustrative example, beam **112** is electronically steerable. In other words, a mechanical system to move antenna **108** is not needed to steer beam **112.**

As depicted, antenna **108** is comprised of antenna elements **114.** In this illustrative example, antenna elements **114** form wideband antenna array **116** for antenna **108.**

In this illustrative example, antenna element **118** in antenna elements **114** is comprised of aperture structure **120,** primary radiating slot **122,** tuning slot **124,** and stripline feed **126.** In this illustrative example, stripline feed **126** is a quasi-transverse electromagnetic transmission line medium. Stripline feed **126** may be a flat strip of metal sandwiched between two parallel ground plates.

Primary radiating slot **122** is located in aperture structure **120.** Tuning slot **124** is also located in aperture structure **120.** As depicted, primary radiating slot **122** and tuning slot **124** form aperture **128** in aperture structure **120.**

In this illustrative example, stripline feed **126** is located between primary radiating slot **122** and tuning slot **124** in aperture structure **120.** As depicted, stripline feed **126** is offset from center line **134** of aperture structure **120.**

In designing antenna element **118,** at least one of a dimension and a position of primary radiating slot **122,** tuning slot **124,** and stripline feed **126** are selected for setting operating bandwidth **130** for aperture structure **120.** Operating bandwidth **130** is a range of frequencies in which aperture structure **120** may send or receive radio frequency signals **110.** In another example, operating bandwidth **130** may be described as a percentage of operating frequencies relative to a center frequency. Further, at least one of a position or the dimensions of stripline feed **126** are selected for impedance matching to aperture **128** formed by primary radiating slot **122** and tuning slot **124.**

In this depicted example, antenna element **118,** along with antenna elements **114,** form beam **112** from radio frequency signals **110.** Beam **112** is in the form of electronically steered beam **132.** In this depicted example, the steering of electronically steered beam **132** is controlled by controller **106.**

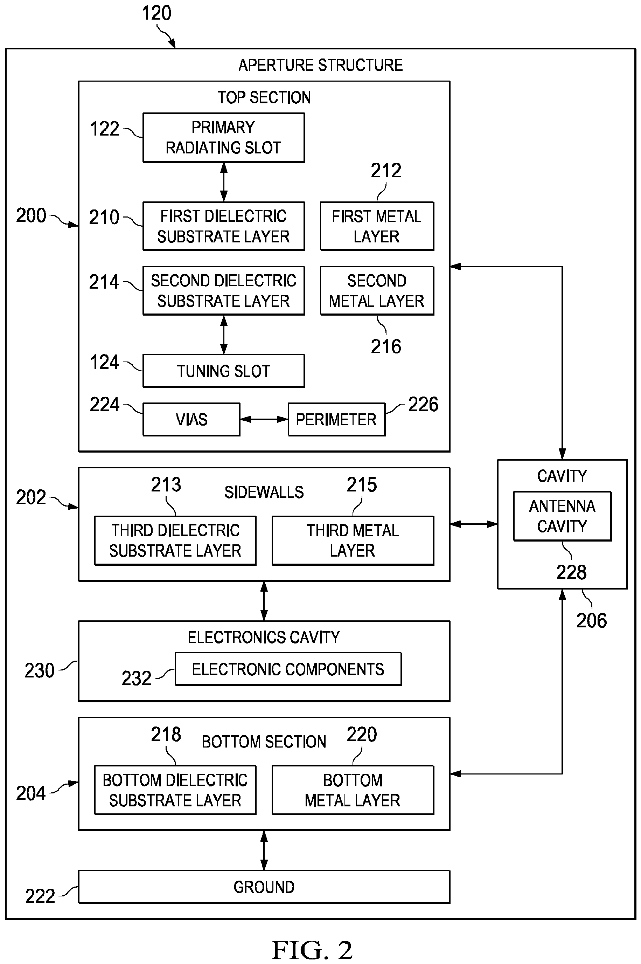

With reference now to **Figure 2****,** an illustration of a block diagram of an aperture structure is depicted in accordance with an illustrative embodiment. **Figure 2** depicts an example of one implementation for aperture structure **120** in **Figure 1****.**

Aperture structure **120** is comprised of a number of different components. As depicted, aperture structure **120** is comprised of top section **200,** sidewalls **202,** and bottom section **204.** Aperture structure **120** also includes cavity **206,** which is formed by top section **200,** sidewalls **202,** and bottom section **204.**

As depicted, top section **200** has first dielectric substrate layer **210** with first metal layer **212** and second dielectric substrate layer **214** with second metal layer **216.** The layers of substrate for first dielectric substrate layer **210** and second dielectric substrate layer **214** may be printed circuit boards (PCBs). First metal layer **212** and second metal layer **216** are comprised of a metal selected from at least one of a metal alloy, copper, aluminum, silver, gold, or some other material with a desired level of conductivity.

In this example, primary radiating slot **122** is formed in first dielectric substrate layer **210** with first metal layer **212.** Tuning slot **124** is formed in second dielectric substrate layer **214** with the second metal layer **216.**

In this illustrative example, sidewalls **202** are formed from third dielectric substrate layer **213** and third metal layer **215** on the side facing cavity **206.** Bottom section **204** has bottom dielectric substrate layer **218** with bottom metal layer **220.** Ground **222** in antenna system **102** shown in **Figure 1** is formed from bottom metal layer **220.**

In this example, vias **224** are located in the top section **200.** Vias **224** are in locations that define perimeter **226** around primary radiating slot **122** and tuning slot **124.**

A via is a vertical interconnected access that may be used to provide an electrical connection. A via is a small opening through the dielectric substrate in top section **200** that allows for a conductive connection between components on either side of top section **200.** In this illustrative example, vias **224** also function as a Faraday cage that is an enclosure to block electromagnetic fields. In this manner, external interfering radio frequency signals may be weakened or prevented from being added to those being exchanged through aperture **128** in **Figure 1****.**

As depicted, cavity **206** is a cavity in which radio frequency signals are generated and transmitted, or received. Cavity **206** is filled with a group of materials. The group of materials in cavity **206** may be selected from at least one of air, a foam, or some other suitable material. Other materials may be selected to have a desired weight and dielectric constant.

Further, sidewalls **202** may define one or more cavities, in addition to cavity **206.** In the illustrative example, cavity **206** is antenna cavity **228** and sidewalls **202** form electronics cavity **230** in aperture structure **120.** A group of electronic components **232** is associated with electronics cavity **230.** The group of electronic components **232** is selected from at least one of an amplifier, a filter, a phase shifter, a time delay device, or some other suitable type of component. Electronic components **232** may be selected for signal conditioning or distribution.

Thus, in one illustrative example, one or more technical solutions are present that overcome a technical problem with steering beams from an antenna using an architecture that has a desired weight and performance. As a result, one or more technical solutions may provide a technical effect in which an antenna element has an aperture formed from two slots that provide a desired level of performance over different frequencies. One or more technical solutions may provide a wide band antenna array with a desired level of weight and cost as compared to current solutions. Further, one or more technical solutions also may provide an ability for a beam to be scanned over a wide bandwidth and at many angles within a desired scan volume or field-of-regard. The bandwidth and angle over which a beam may be scanned are approximately the same or greater, in the illustrative examples, compared to currently used much-heavier antenna elements for the intended applications.

The illustration of antenna environment **100** **Figures 1****,** aperture structure **120** in **Figure 2****,** and the different components in these environments is not meant to imply physical or architectural limitations to the manner in which an illustrative embodiment may be implemented. Other components, in addition to or in place of the ones illustrated, may be used. Some components may be unnecessary. Also, the blocks are presented to illustrate some functional components. One or more of these blocks may be combined, divided, or combined and divided into different blocks when implemented in an illustrative embodiment.

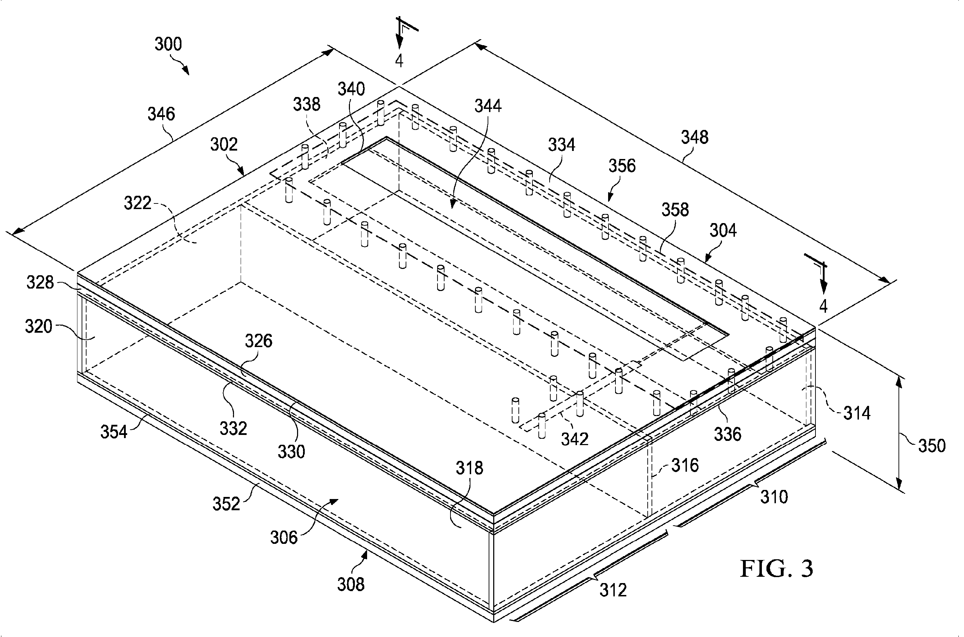

With reference next to **Figure 3****,** an illustration of an antenna element is depicted in accordance with an illustrative embodiment. In this illustrative example, antenna element **300** is shown in a prospective view with some components in phantom.

As depicted, antenna element **300** is an example of a physical implementation for antenna element **118** shown in block form in **Figure 1****.** In this illustrative example, antenna element **300** includes aperture structure **302,** top section **304,** sidewalls **306,** and bottom section **308.** In this illustrative example, sidewalls **306,** along with top section **304** and bottom section **308,** define two cavities, antenna cavity **310** and electronics cavity **312.**

As depicted, sidewalls **306** include sidewall **314,** sidewall **316,** sidewall **318,** sidewall **320,** and sidewall **322.** In this example, each of sidewalls **306** is comprised of a dielectric substrate layer and a metal layer, which are not shown in detail to avoid obscuring a description of other features in antenna element **300.**

In this example, sidewall **314,** sidewall **316,** sidewall **320,** and sidewall **322,** with top section **304** and bottom section **308,** define antenna cavity **310.** Sidewall **314,** sidewall **316,** sidewall **318,** and sidewall **320** with top section **304** and bottom section **308,** define electronics cavity **312.**

As depicted, top section **304** is comprised of first dielectric substrate layer **326,** second dielectric substrate layer **328,** first metal layer **330,** and second metal layer **332.** First dielectric substrate layer **326** is a first layer of a dielectric substrate. Second dielectric substrate layer **328** is a second layer of a dielectric substrate.

First metal layer **330** is located on first dielectric substrate layer **326** of outer surface **334** of aperture structure **302.** Second metal layer **332** is located on second dielectric substrate layer **328** on inner surface **336** of aperture structure **302.** Both first metal layer **330** and second metal layer **332** are comprised of copper in this illustrative example.

In this example, primary radiating slot **340** is formed in first dielectric substrate layer **326** and first metal layer **330.** Tuning slot **338** is formed in second dielectric substrate layer **328** and second metal layer **332.** In accordance with the invention, primary radiating slot **340** has a smaller area than tuning slot **338.** As depicted, primary radiating slot **340** is above tuning slot **338** in top section **304.**

As depicted, stripline feed **342** is located between first dielectric substrate layer **326** and second dielectric substrate layer **328.** Stripline feed **342** is located between tuning slot **338** and primary radiating slot **340.**

At least one of a position, a length, or a shape of stripline feed **342** are tuning parameters for impedance matching to aperture **344** formed by tuning slot **338** and primary radiating slot **340.** Tuning slot **338** provides an additional mechanism for impedance bandwidth tuning. Both tuning slot **338** and primary radiating slot **340** may be selected to control a dominant resonance frequency for aperture structure **302.**

In this illustrative example, bottom section **308** is comprised of bottom dielectric substrate layer **352** and bottom metal layer **354.** Bottom metal layer **354** is located on inner surface **336** of aperture structure **302.**

In this illustrative example, vias **356** is located in top section **304.** As can be seen, vias **356** form perimeter **358** that function as a Faraday cage around tuning slot **338** and primary radiating slot **340.** The Faraday cage also prevents the excitation of undesired and commonly-known parallel-plate modes.

As depicted, aperture structure **302** has width **346,** length **348,** and height **350.** The overall unit cell width that is parallel to a feed line axis is width **346,** and may be selected to allow a grating-lobe-free electronic scan up to 60 degree on a vertical plane parallel to width **346,** and over the intended frequency band of operation. Width **346** may be increased or decreased if the 60 degree off-boresight scan limit is decreased or increased. In one illustrative example, 4.318 cm (1.7 inches) for width **346** allows for a 60 degree off-boresight scan up to about 3.7 GHz.

Length **348** is a unit cell length and is selected to allow a grating-lobe-free electronic scan up to 25 degree on a vertical plane parallel to length **348,** and over the intended frequency band of operation. As depicted, length **348** may be increased or decreased if the 25 degree off-boresight scan limit is decreased or increased. In an illustrative example, 5.588 cm (2.2 inches) for length **348** allows for a 25 degree off-boresight scan up to about 3.7 GHz. A percentage bandwidth of 18% or more can be present in this depicted example.

As depicted, the dimensions for antenna cavity **310** are selected such that undesired cavity modes interfering with the slot radiator operation do not occur. The height for the cavity, or distance from the slot to the horizontal ground on bottom section **308** is also chosen to redirect backward radiation to the forward direction for increased antenna gain and to provide an additional mechanism for impedance bandwidth tuning.

The dielectric substrate layers are formed from circuit boards in which the thicknesses of the circuit boards are selected such that the overall structure meets mechanical stress requirements. The thicknesses and dielectric constants of the circuit boards supporting stripline feed **342** are also selected such that the corresponding feed line dimensions meet manufacturability constraints.

In another illustrative embodiment, the location of primary radiating slot **340** and tuning slot **338** can be exchanged with minor retuning. Also, a thin non-metallic environmental coating may be placed on top of first metal layer **330.** For example, the coating may be used to prevent corrosion of copper in the circuit boards.

As depicted, top section **304,** sidewalls **306,** and bottom section **308** in aperture structure **302** are comprised of printed circuit boards. These printed circuit boards may be fabricated separately and are bonded together in a final assembly with other aperture structures to form an egg crate structure in an array setting in which other antenna elements are present in addition to antenna element **300** and arranged in an array, such that radio-frequency signals may be exchanged using an electronically steered beam. An egg crate structure for an antenna is formed by interconnected dielectric panels in the antenna elements with typically uniform spacing and rectangular lattice.

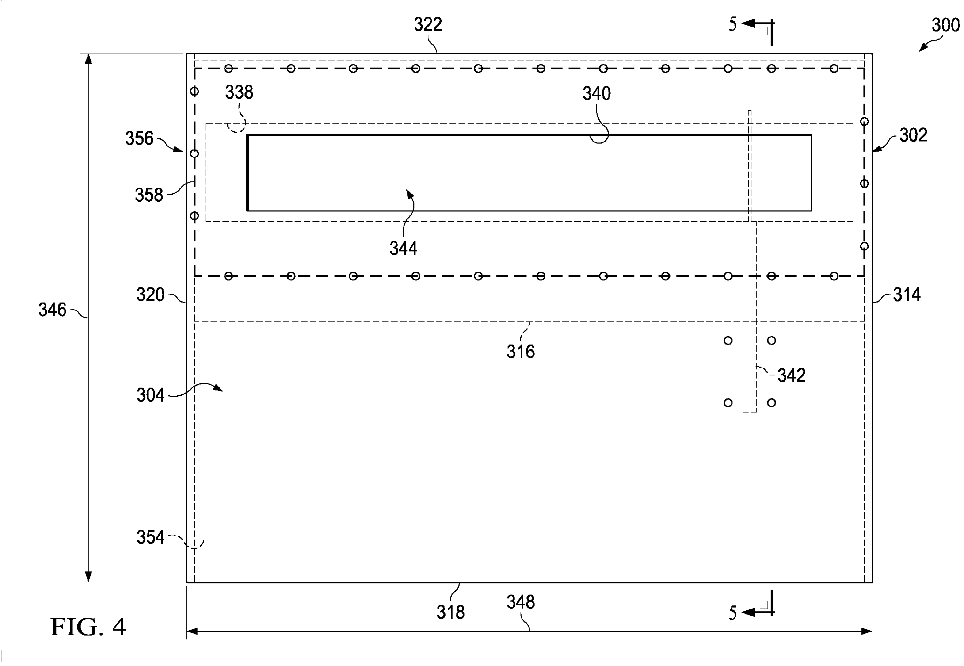

With reference now to **Figure 4****,** an illustration of a top view of an antenna element is depicted in accordance with an illustrative embodiment. In this illustrative example, the top view of antenna element **300** is seen in the direction of lines **4-4** in **Figure 3****.**

In this view, aperture **344** is shown with vias **356** forming perimeter **358** surrounding primary radiating slot **340,** tuning slot **338,** and stripline feed **342.** Vias **356** may function to reduce or suppress undesirable parallel plate modes between two ground planes and isolate primary radiating slot **340** from the power distribution circuits in an array (not shown) and stripline feeds from neighboring antenna elements. The diameter and density of vias **356** may be selected such that vias **356** form a Faraday cage providing a desired electrical shield over the intended frequency band of operation by antenna element **300.**

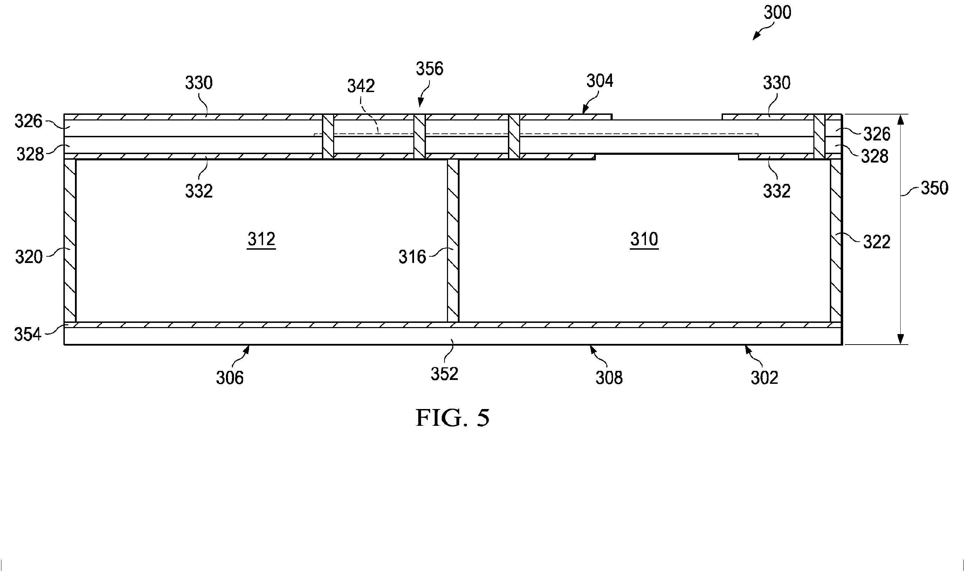

Turning now to **Figure 5****,** an illustration of a cross-sectional view of an antenna element is depicted in accordance with an illustrative embodiment. As depicted, this cross-sectional view of antenna element **300** is taken along lines **5-5** in **Figure 4****.**

In this view, the relative thicknesses of top section **304** and stripline feed **342** within top section **304** and antenna cavity **310** are seen. In this particular example, height **350** of aperture structure **302** is about 0.14 wavelengths in free space at a mid-band frequency. The main cavity redirects backward radiation to the forward direction for increased antenna gain. This type of cavity also reduces undesired mutual coupling with neighboring antenna elements.

As depicted, electronics cavity **312** is used to house active or passive electronics, if necessary, depending on the need to scan both elevation and azimuth, or just on an elevation plane parallel to a feed line axis. The electronics that may be placed in electronics cavity **312** include at least one of an amplifier, a filter for signal conditioning, a phase shifter, or a time-delay device for antenna array beam steering.

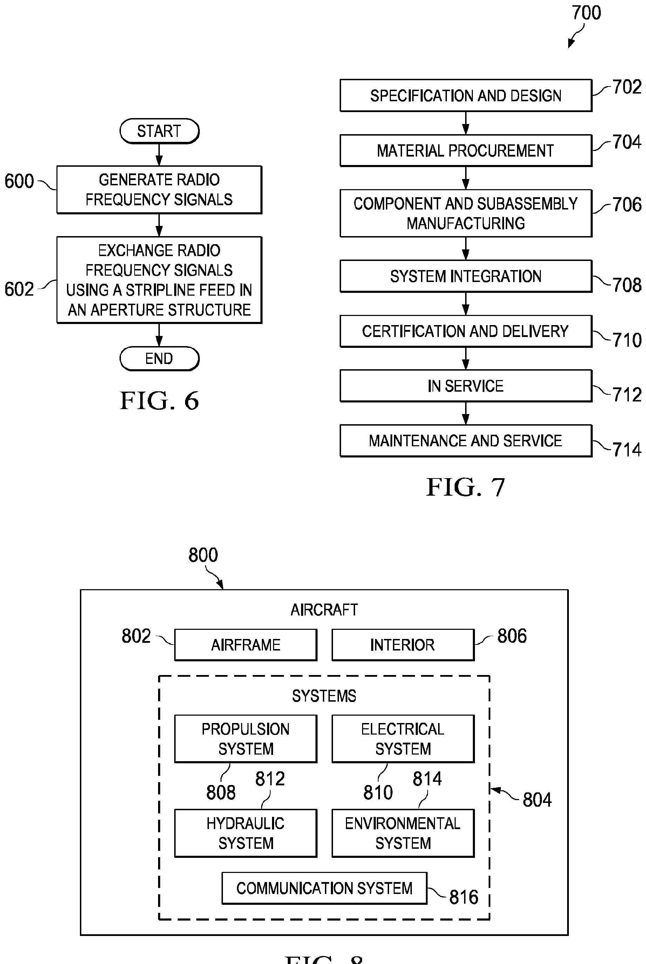

Turning next to **Figure 6****,** an illustration of a flowchart of a process for exchanging radio frequency signals is depicted in accordance with an illustrative embodiment. The process illustrated in **Figure 6** may be implemented using antenna system **102** in **Figure 1****.** Exchanging radio frequency signals includes at least one of transmitting radio frequency signals or receiving radio frequency signals.

The process begins by generating radio frequency signals (operation **600**). The process exchanges radio frequency signals using a stripline feed in an aperture structure (operation **602**). The process terminates thereafter. The aperture structure includes a primary radiating slot and a tuning slot. The stripline feed is located between the primary radiating slot and the tuning slot in the aperture structure.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, hardware, or a combination of program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added, in addition to the illustrated blocks, in a flowchart or block diagram.

The illustrative embodiments of the present disclosure may be described in the context of aircraft manufacturing and service method **700** as shown in **Figure 7** and aircraft **800** as shown in **Figure 8****.** Turning first to **Figure 7****,** an illustration of a block diagram of an aircraft manufacturing and service method is depicted in accordance with an illustrative embodiment. During pre-production, aircraft manufacturing and service method **700** may include specification and design **702** of aircraft **800** in **Figure 8** and material procurement **704.**

During production, component and subassembly manufacturing **706** and system integration **708** of aircraft **800** in **Figure 8** takes place. Thereafter, aircraft **800** in **Figure 8** may go through certification and delivery **710** in order to be placed in service **712.** While in service **712** by a customer, aircraft **800** in **Figure 8** is scheduled for routine maintenance and service **714,** which may include modification, reconfiguration, refurbishment, and other maintenance or service.

Each of the processes of aircraft manufacturing and service method **700** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of a block diagram of an aircraft is depicted in accordance with an illustrative embodiment. In this example, aircraft **800** is produced by aircraft manufacturing and service method **700** in **Figure 7** and may include airframe **802** with plurality of systems **804** and interior **806.** Examples of systems **804** include one or more of propulsion system **808,** electrical system **810,** hydraulic system **812,** environmental system **814,** and communications system **816.** For example, antenna system **102** shown in **Figure 1** may be implemented in communications system **816.** Antenna system **102** in **Figure 1** may be implemented in other systems such as sensors, countermeasures, electronic warfare, or other type of systems in aircraft **800.**

In other illustrative of examples, any number of other systems may be included. Although an aerospace example is shown, different illustrative embodiments may be applied to other industries, such as the automotive industry. Apparatuses and methods embodied herein may be employed during at least one of the stages of aircraft manufacturing and service method **700** in **Figure 7****.**

In one illustrative example, components or subassemblies produced in component and subassembly manufacturing **706** in **Figure 7** may be fabricated or manufactured in a manner similar to components or subassemblies produced while aircraft **800** is in service **712** in **Figure 7****.** As yet another example, one or more apparatus embodiments, method embodiments, or a combination thereof may be utilized during production stages, such as component and subassembly manufacturing **706** and system integration **708** in **Figure 7****.** One or more apparatus embodiments, method embodiments, or a combination thereof may be utilized while aircraft **800** is in service **712,** during maintenance and service **714** in **Figure 7****,** or both.

The use of a number of the different illustrative embodiments may substantially expedite the assembly of aircraft **800,** reduce the cost of aircraft **800,** or both expedite the assembly of aircraft **800** and reduce the cost of aircraft **800.** For example, antenna system **102** in **Figure 1** may be implemented during the assembly of aircraft **800** in a manner that reduces the weight and cost of aircraft **800** as compared to other types of antenna systems that provide a wideband capability along with an electronically steered beam.

In this manner, one or more technical solutions in the illustrative examples provide a lightweight, low-profile, and lower cost wideband antenna array as compared to currently used antenna arrays. One or more illustrative examples may reduce the weight of an antenna by 70% or more and the total thickness by up to 50% compared to existing designs, without sacrificing antenna radio frequency performance. Further, one or more illustrative examples also may allow for desired bandwidth and scan angles when electronically steering a beam. Savings in weight occurs through the use of a dielectric substrate, such as printed circuit boards. Further, the use of these printed circuit boards, along with the configuration of slots for the aperture, allow for at least one of a desired bandwidth, such as a wideband application, or desired angles over which the beam may be electronically steered.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An antenna system (102) comprising:
an aperture structure (120);
a primary radiating slot (122) in the aperture structure (120);
a tuning slot (124) in the aperture structure (120); and
a stripline feed (126) located between the primary radiating slot (122) and the tuning slot (124) in the aperture structure (120),
wherein the primary radiating slot (122) is above the tuning slot (124);
the antenna system being **characterised in that**
the primary radiating slot (122) has a smaller area than the tuning slot (124).

2. The antenna system (102) of claim 1, wherein the stripline feed (126) is offset from a center line (134) of the aperture structure (120).

3. The antenna system (102) of claim 1 or 2, wherein the aperture structure (120) comprises a top section (200), sidewalls (202), and a bottom section (204) formed from printed circuit boards.

4. The antenna system (102) of claim 1 or 2, wherein the aperture structure (120) comprises:
a top section (200) having a first dielectric substrate layer (210) with a first metal layer (212), and a second dielectric substrate layer (214) with a second metal layer (216), wherein the primary radiating slot (122) is formed in the first dielectric substrate layer (210) with the first metal layer (212), and wherein the tuning slot (124) is formed in the second dielectric substrate layer (214) with the second metal layer (216);
sidewalls (202) comprising a third dielectric substrate (213) layer and a third metal layer (215); and
a bottom section (204) having a bottom dielectric substrate layer (218) with a bottom metal layer (220) for a ground in the antenna system (102), wherein the top section (200), the sidewalls (202), and the bottom section (204) form a cavity in the aperture structure (120) .

5. The antenna system (102) of claim 4, wherein the top section (200), the sidewalls (202), and the bottom section (204) are comprised of printed circuit boards that have been fabricated separately and bonded together in order to be suitable to be assembled with other aperture structures to form an egg crate structure in an array setting.

6. The antenna system (102) of any of claims 3 to 5 further comprising:
vias (224) in the top section (200), wherein the vias (224) define a perimeter (226) around the primary radiating slot (122) and the tuning slot (124).

7. The antenna system (102) of any of claims 4 to 6, wherein the cavity (206) is an antenna cavity (228), and wherein the sidewalls (202) form an electronics cavity (230) in the aperture structure (120).

8. The antenna system (102) of any preceding claim, wherein at least dimensions and positions of the primary radiating slot (122), the tuning slot (124), and the stripline feed (126) set an operating bandwidth for the aperture structure (120).

9. The antenna system (102) of any preceding claim, wherein a position and/or dimensions of the stripline feed (126) are impedance matched to an aperture formed by the primary radiating slot (122) and the tuning slot (124) .

10. The antenna system (102) of any preceding claim, wherein the aperture structure (120), the primary radiating slot (122), the tuning slot (124), and the stripline feed (126) are configured to form an antenna element (118) in a wide band antenna array that is arranged to form an electronically steered beam.

11. A method for exchanging radio frequency signals comprising:
exchanging the radio frequency signals using the stripline feed (126) of the antenna system of any of claims 1 to 12.

12. The method of claim 11 further comprising:
exchanging the radio frequency signals from other aperture structures arranged in an array with the aperture structure (120) to form a beam; and /or
electronically steering the beam.

## Patentansprüche

1. Antennensystem (102) mit:
einer Aperturstruktur (120);
einem primären Abstrahlschlitz (122) in der Aperturstruktur (120);
einem Abstimmschlitz (124) in der Aperturstruktur (120); und
einer Streifeneinspeisungsleitung (126), die zwischen dem primären Abstrahlschlitz (122) und dem Abstimmschlitz (124) in der Aperturstruktur (120) angeordnet ist,
wobei der primäre Abstrahlschlitz (122) oberhalb des Abstimmschlitze s (124) liegt;
wobei das Antennensystem **dadurch gekennzeichnet ist, dass** der primäre Abstrahlschlitz (122) eine kleinere Fläche hat als der Abstimmschlitz (124).

2. Antennensystem (102) nach Anspruch 1, bei dem die Streifeneinspeisungsleitung (126) gegen eine Mittellinie (134) der Aperturstruktur (120) versetzt ist.

3. Antennensystem (102) nach Anspruch 1 oder 2, bei dem die Aperturstruktur (120) einen oberen Abschnitt (200), Seitenwände (202) und einen unteren Abschnitt (204) umfasst, die aus gedruckten Leiterplatten gebildet sind.

4. Antennensystem (102) nach Anspruch 1 oder 2, bei dem die Aperturstruktur (120) umfasst:
einen oberen Abschnitt (200), der eine erste dielektrische Substratschicht (210) mit einer ersten Metallschicht (212) und eine zweite dielektrische Substratschicht (214) mit einer zweiten Metallschicht (216) aufweist, wobei der primäre Abstrahlschlitz (122) in der ersten dielektrischen Substratschicht (210) mit der ersten Metallschicht (212) ausgebildet ist, und wobei der Abstimmschlitz (124) in der zweiten dielektrischen Substratschicht (214) mit der zweiten Metallschicht (216) ausgebildet ist;
Seitenwände (202) mit einer dritten dielektrischen Substratschicht (213) und einer dritten Metallschicht (215); und
einen unteren Abschnitt (204), der eine untere dielektrische Substratschicht (218) mit einer unteren Metallschicht (220) für eine Masse des Antennensystems (102) aufweist, wobei der obere Abschnitt (200), die Seitenwände (202) und der untere Abschnitt (204) einen Hohlraum in der Aperturstruktur (120) bilden.

5. Antennensystem (102) nach Anspruch 4, bei dem der obere Abschnitt (200), die Seitenwände (202) und der untere Abschnitt (204) aus gedruckten Leiterplatten gebildet sind, die separat hergestellt und miteinander verbunden wurden, um geeignet zu sein, mit anderen Aperturstrukturen zu einer Eierkartonstruktur in einer Array-Anordnung zusammengebaut zu werden.

6. Antennensystem (102) nach einem der Ansprüche 3 bis 5, ferner mit:
Durchkontaktierungen (224) im oberen Abschnitt (200), wobei die Durchkontaktierungen (224) einen Umfang (226) um den primären Abstrahlschlitz (122) und den Abstimmschlitz (124) herum definieren.

7. Antennensystem (102) nach einem der Ansprüche 4 bis 6, bei dem der Hohlraum (206) ein Antennenhohlraum (228) ist, und die Seitenwände (202) einen Elektronikhohlraum (230) in der Aperturstruktur (120) bilden.

8. Antennensystem (102) nach einem der vorhergehenden Ansprüche, bei dem zumindest die Abmessungen und Positionen des primären Abstrahlschlitzes (122), des Abstimmschlitzes (124) und der Streifenzuführungsleitung (126) eine Betriebsbandbreite für die Aperturstruktur (120) festlegen.

9. Antennensystem (102) nach einem der vorhergehenden Ansprüche, bei dem eine Position und/oder Abmessungen der Streifenzuführungsleitung (126) an eine durch den primären Abstrahlschlitz (122) und den Abstimmschlitz (124) gebildete Apertur impedanzangepasst sind.

10. Antennensystem (102) nach einem der vorhergehenden Ansprüche, bei dem die Aperturstruktur (120), der primäre Abstrahlschlitz (122), der Abstimmschlitz (124) und die Streifeneinspeisungsleitung (126) konfiguriert sind, um ein Antennenelement (118) in einem Breitbandantennenarray zu bilden, das eingerichtet ist, um einen elektronisch gesteuerten Strahl zu bilden.

11. Verfahren zum Austauschen von Hochfrequenzsignalen, umfassend:
Austauschen der Hochfrequenzsignale unter Verwendung der Streifenzuführungsleitung (126) des Antennensystems nach einem der Ansprüche 1 bis 12.

12. Verfahren nach Anspruch 11 ferner umfassend:
Austauschen der Hochfrequenzsignale von anderen Aperturstrukturen, die in einem Array mit der Aperturstruktur (120) angeordnet sind, um einen Strahl zu bilden; und /oder
elektronisches Lenken des Strahls.

## Revendications

1. Système d'antenne (102) comprenant :
une structure d'ouverture (120) ;
une fente de rayonnement primaire (122) dans la structure d'ouverture (120) ;
une fente de réglage (124) dans la structure d'ouverture (120) ; et
une alimentation par ligne ruban (126) située entre la fente de rayonnement primaire (122) et la fente de réglage (124) dans la structure d'ouverture (120) ;
dans lequel la fente de rayonnement primaire (122) est située au-dessus de la fente de réglage (124) ;
le système d'antenne étant **caractérisé en ce que** la fente de rayonnement primaire (122) présente une surface plus petite que celle de la fente de réglage (124).

2. Système d'antenne (102) selon la revendication 1, dans lequel l'alimentation par ligne ruban (126) est décalée par rapport à une ligne centrale (134) de la structure d'ouverture (120) .

3. Système d'antenne (102) selon la revendication 1 ou 2, dans lequel la structure d'ouverture (120) comprend une section supérieure (200), des parois latérales (202) et une section inférieure (204) formée de cartes de circuits imprimés.

4. Système d'antenne (102) selon la revendication 1 ou 2, dans lequel la structure d'ouverture (120) comprend :
une section supérieure (200) présentant une première couche de substrat diélectrique (210) avec une première couche métallique (212), et une deuxième couche de substrat diélectrique (214) avec une deuxième couche métallique (216), dans laquelle la fente de rayonnement primaire (122) est formée dans la première couche de substrat diélectrique (210) avec la première couche métallique (212), et dans laquelle la fente de réglage (124) est formée dans la deuxième couche de substrat diélectrique (214) avec la deuxième couche métallique (216) ;
des parois latérales (202) comprenant une troisième couche de substrat diélectrique (213) et une troisième couche métallique (215) ; et
une section inférieure (204) présentant une couche de substrat diélectrique inférieure (218) avec une couche métallique inférieure (220) pour une mise à la terre dans le système d'antenne (102), dans laquelle la section supérieure (200), les parois latérales (202) et la section inférieure (204) forment une cavité dans la structure d'ouverture (120).

5. Système d'antenne (102) selon la revendication 4, dans lequel la section supérieure (200), les parois latérales (202) et la section inférieure (204) sont constituées de cartes de circuits imprimés qui ont été fabriquées individuellement et collées ensemble afin de pouvoir être assemblées avec d'autres structures d'ouverture pour former une structure alvéolée dans une configuration de réseau.

6. Système d'antenne (102) selon l'une quelconque des revendications 3 à 5 comprenant en outre :
des trous d'interconnexion (224) dans la section supérieure (200), dans lesquels les trous d'interconnexion (224) définissent un périmètre (226) autour de la fente de rayonnement primaire (122) et de la fente de réglage (124).

7. Système d'antenne (102) selon l'une quelconque des revendications 4 à 6, dans lequel la cavité (206) est une cavité d'antenne (228), et dans lequel les parois latérales (202) forment une cavité électronique (230) dans la structure d'ouverture (120) .

8. Système d'antenne (102) selon l'une quelconque des revendications précédentes, dans lequel au moins les dimensions et les positions de la fente de rayonnement primaire (122), de la fente de réglage (124) et de l'alimentation par ligne ruban (126) définissent une largeur de bande de fonctionnement pour la structure d'ouverture (120) .

9. Système d'antenne (102) selon l'une quelconque des revendications précédentes, dans lequel une position et/ou des dimensions de l'alimentation par ligne ruban (126) sont adaptées en impédance à une ouverture formée par la fente de rayonnement primaire (122) et la fente de réglage (124).

10. Système d'antenne (102) selon l'une quelconque des revendications précédentes, dans lequel la structure d'ouverture (120), la fente de rayonnement primaire (122), la fente de réglage (124) et l'alimentation par ligne ruban (126) sont configurées de manière à former un élément d'antenne (118) dans un réseau d'antennes à large bande qui est agencé de façon à former un faisceau dirigé électroniquement.

11. Procédé d'échange de signaux radiofréquence comprenant l'étape ci-dessous consistant à :
échanger les signaux radiofréquence en utilisant l'alimentation par ligne ruban (126) du système d'antenne selon l'une quelconque des revendications 1 à 12.

12. Procédé selon la revendication 11, comprenant en outre les étapes ci-dessous consistant à :
échanger les signaux radiofréquence à partir d'autres structures d'ouverture agencées en un réseau avec la structure d'ouverture (120) pour former un faisceau ; et/ou
diriger électroniquement le faisceau.
